# EUROPEAN PATENT APPLICATION

(11) **EP 2 703 993 A2**
(43) Date of publication of application: **05.03.2014**
(21) Application number: 13181159.8
(22) Date of filing: 21.08.2013
(51) Int. Cl.: G06F 3/06

(54) **Information processing apparatus, computer program, and copy control method**

(30) Priority: 30.08.2012 JP 2012190476
(71) Applicant: FUJITSU LIMITED, Kawasaki-shi, Kanagawa 211-8588 (JP)
(72) Inventor: Yamada, Hidenori, Kanagawa 211-8588 (JP); Usui, Kazuhiko, Kanagawa 211-8588 (JP)
(74) Representative: HOFFMANN EITLE

(57) **Abstract**

The information processing apparatus, which is a control apparatus which performs access control and copy control of a disk unit, forms a storage apparatus together with the disk unit. The copy controller manages copy sessions. A copy session is a unit of management of copying a copy source data area on a copy source disk to a copy destination data area on a copy destination disk. A copy session management unit, when there is a plurality of copy sessions, performs scheduling of the plurality of copy sessions with the disk unit being the copy destination disk, and notifies a copy controller controlling the copy source disk of the schedule. An execution unit which has been notified of the schedule executes a copy of a copy session according to the schedule.

## Description

### FIELD

The embodiments discussed herein relate to an information processing apparatus, a computer program, and a copy control method.

### BACKGROUND

In storage apparatuses such as disk array apparatuses, copy is performed between disks of a single storage apparatus or between disks of different storage apparatuses. In this occasion, there may be a plurality of copy source disks for a single copy destination disk.

In such a case, insufficient performance of the copy destination disk may cause the storage apparatus to degrade the performance of the copy source disk, and the range of influence may extend to degraded performance of applications accessing the copy source disk.

Therefore, there has been proposed a storage apparatus which changes the order of copy processes to increase the sequentiality of accessing the copy destination disk, thereby improving disk access performance.

Japanese Laid-open Patent Publication No. 2010-191859

Japanese Laid-open Patent Publication No. 2006-146841

However, a storage apparatus not only executes a copy between disks inside the storage apparatus (local copy) but also executes a copy between disks of the respective storage apparatuses (remote copy), as described above.

Although disk access performance of a local copy in which a copy configuration is recognizable may be improved by changing the order of copy processes, improvement of disk access performance may not be expected for a remote copy in which the copy configuration is not recognizable.

In addition, improvement of disk access performance may also not be expected since it is difficult to recognize the copy configuration when copy source disks are distributed across a plurality of storage apparatuses.

### SUMMARY

According to an aspect, there is provided an information processing apparatus, a computer program, and a copy control method which are capable of improving disk access performance regardless of the arrangement of copy destination disks and copy source disks.

According to an aspect, there is provided an information processing apparatus including: access control means for controlling access to a storage apparatus capable of storing information; and copy session management means for preparing, when the storage apparatus is a copy destination, a schedule of a copy session which executes a copy of information of a copy source storage apparatus, notifying the copy source storage apparatus of the schedule, and causing the copy source storage apparatus to execute a copy of the copy session according to the schedule.

### BRIEF DESCRIPTION OF DRAWINGS

FIG. 1 illustrates an exemplary configuration of an information processing apparatus of a first embodiment;
FIG. 2 illustrates an exemplary local configuration of a storage apparatus of a second embodiment;
FIG. 3 illustrates an exemplary remote configuration of the storage apparatus of the second embodiment;
FIG. 4 illustrates an exemplary hardware configuration of a controller module of the second embodiment;
FIG. 5 illustrates a flow chart of a copy session setting procedure of the second embodiment;
FIG. 6 illustrates an exemplary session management table of the second embodiment;
FIG. 7 illustrates an exemplary RAID group management table of the second embodiment;
FIG. 8 illustrates an exemplary setting of the copy session of the second embodiment;
FIG. 9 illustrates a flow chart of a copy session management procedure of the second embodiment;
FIG. 10 illustrates a flow chart of a copy-session-to-be-executed determination procedure of the second embodiment;
FIG. 11 illustrates a flow chart of a copy execution necessity updating procedure of the second embodiment;
FIG. 12 illustrates a flow chart of a copy-session-copy-execution procedure of the second embodiment;
FIG. 13 illustrates an exemplary transition of a session management table and a RAID group management table when executing a copy of the second embodiment;
FIG. 14 illustrates an exemplary setting of a copy session of a third embodiment;
FIG. 15 illustrates an exemplary transition of data held in a cache memory when executing a copy of the third embodiment; and
FIG. 16 illustrates a flow chart of a copy-session-to-be-executed-at-low-speed determination procedure of the third embodiment.

### DESCRIPTION OF EMBODIMENTS

Several embodiments will be described below with reference to the accompanying drawings, wherein like reference numerals refer to like elements throughout.

### [First Embodiment]

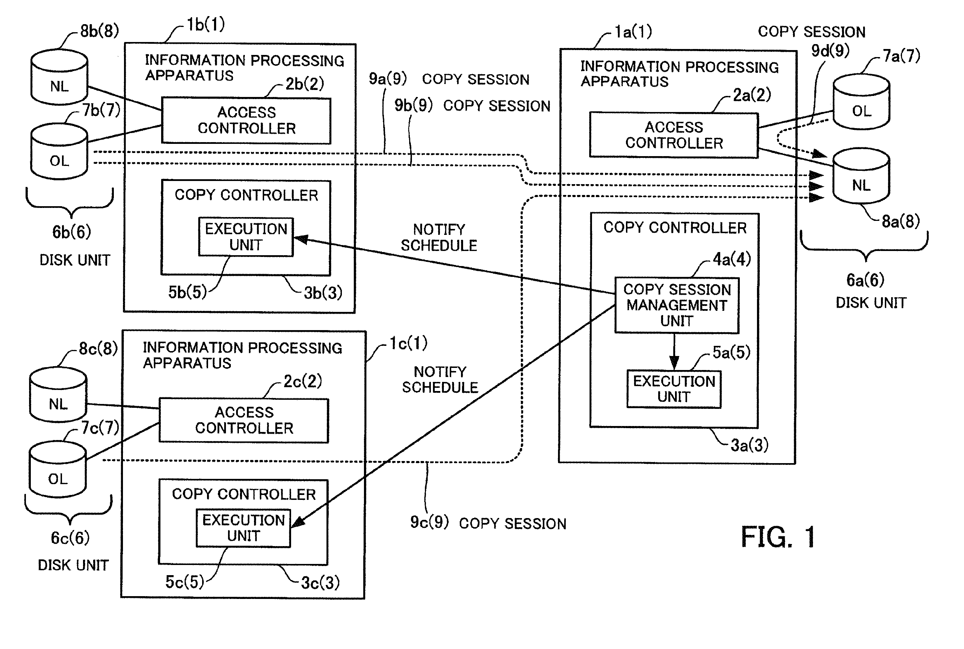

First, an information processing apparatus of a first embodiment will be described, referring to FIG. 1. FIG. 1 illustrates an exemplary configuration of an information processing apparatus of the first embodiment.

An information processing apparatus 1, which is a controller which performs access control and copy control of a disk unit 6, forms a storage apparatus together with the disk unit 6.

The disk unit 6 includes an online disk (OL) 7 having a relatively small storage capacity but exhibiting high performance (high reliability, high speed, etc.) and a nearline disk (NL) 8 having a relatively large storage capacity but exhibiting low performance (suppressed high speed), or either an online disk 7 or a nearline disk 8. In other words, in the disk unit 6, an online disk 7 and a nearline disk 8 exhibiting different performances may be mixedly present. The online disk 7 and the nearline disk 8 are storage devices (memory) capable of storing desired information, such as for example, an HDD (Hard Disk Drive), an SSD (Solid State Drive: flash memory drive), or the like.

The information processing apparatus 1 performs not only a local copy within the disk unit 6 to be controlled, but also a remote copy between the disk unit 6 controlled by the aforementioned information processing apparatus 1 and a disk unit 6 controlled by another information processing apparatus 1.

The information processing apparatus 1 includes an access controller 2 and a copy controller 3. The access controller 2 controls access (read, write, etc.) to the disk unit 6.

The copy controller 3 manages a plurality of copy sessions 9. A copy session is a unit of management of copying a copy source data area on a copy source disk to a copy destination data area on a copy destination disk. The copy controller 3 includes a copy session management unit 4 and an execution unit 5.

The copy session 9 is a unit of management for managing a copy source and a copy destination. More specifically, the copy session 9 is a unit of management of copying a copy source data area on a copy source disk to a copy destination data area on a copy destination disk.

Information processing apparatuses 1a, 1b and 1c are configured similarly to each other and have access controllers 2a, 2b and 2c and copy controllers 3a, 3b and 3c, respectively. The access controllers 2a, 2b and 2c respectively perform access control of disk units 6a, 6b and 6c. The disk unit 6a includes an online disk 7a and a nearline disk 8a, the disk unit 6b includes an online disk 7b and a nearline disk 8b, and the disk unit 6c includes an online disk 7c and a nearline disk 8c. The copy controllers 3b and 3c are configured similarly to the copy controller 3a, the copy controller 3b has a copy session management unit (not illustrated) and an execution unit 5b, and the copy controller 3c also has a copy session management unit (not illustrated) and an execution unit 5c.

The copy session management unit 4 performs scheduling of the copy sessions 9. The copy sessions 9 include copy sessions 9 that perform a remote copy and copy sessions 9 that perform a local copy. The copy session 9 for a remote copy is the one with a disk unit 6 controlled by the information processing apparatus 1 being the copy destination, and a disk unit 6 not controlled by the information processing apparatus 1 being the copy source. The copy session 9 for a local copy is the one with a disk unit 6 controlled by the information processing apparatus 1 being both the copy destination and the copy source.

For example, the copy sessions 9 for a remote copy with the nearline disk 8a of the disk unit 6a of the information processing apparatus 1a being the copy destination include copy sessions 9a, 9b and 9c. The copy sessions 9a and 9b are the copy sessions 9 with the disk unit 6b of the information processing apparatus 1b being the copy source. In addition, the copy session 9c is the copy session 9 with the disk unit 6c of the information processing apparatus 1c being the copy source.

In addition, the copy session 9 for a local copy with the nearline disk 8a of the disk unit 6a of the information processing apparatus 1a being the copy destination includes the copy session 9d. The copy session 9d is the copy session 9 with the online disk 7a of the disk unit 6a of the information processing apparatus 1a being the copy source.

The copy session management unit 4 of the copy destination notifies the copy controller 3 controlling the copy source disk of the schedule prepared for the copy session 9. When there is a plurality of copy controllers 3 controlling the copy source disks, the copy session management unit 4 of the copy destination notifies each of the copy controllers 3 of the schedule.

For example, the copy session management unit 4a of the copy destination performs scheduling of the copy sessions 9a, 9b, 9c and 9d and prepares a schedule of copy executions of the copy sessions 9a, 9b, 9c and 9d. The copy session management unit 4a notifies the copy controllers 3b and 3c of the schedule.

When there exists a copy session 9 with the disk unit 6 of the information processing apparatus 1 having the execution unit 5 of the copy source being the copy source disk, the execution unit 5 of the copy source, when being notified of the schedule, executes a copy of the copy session 9 according to the schedule.

For example, when the copy session management unit 4a of the copy destination performs scheduling of the copy sessions 9a, 9b, 9c and 9d, and notifies the schedule, the execution unit 5b of the copy source having received the notification of the schedule executes a copy of the copy sessions 9a and 9b according to the schedule. Similarly, the execution unit 5c of the copy source having received the notification of the schedule executes a copy of the copy session 9c according to the schedule.

Since the copy session 9d is a local copy, the copy session management unit 4a functions as the copy session management unit of the copy destination, the execution unit 5a functions as the execution unit of the copy destination, and the copy session management unit 4a notifies the execution unit 5a of the schedule. The execution unit 5a of the copy source having received the notification of the schedule executes a copy of the copy session 9d according to the schedule. Accordingly, the information processing apparatus 1a improves the sequential access performance in copy destination memory (nearline disk 8a) of the disk unit 6a. In addition, when there is a plurality of copy sessions 9, the information processing apparatus 1a suppresses execution of an unplanned copy of the copy sessions 9 by scheduling, and whereby the sequential access performance in the copy destination memory (nearline disk 8a) of the disk unit 6a is improved.

In addition, the copy execution efficiency of the information processing apparatuses 1b and 1c improves along with improvement of the sequential access performance in the copy destination memory (nearline disk 8a) of the disk unit 6a. Access control of the disk units 6b and 6c by the information processing apparatuses 1b and 1c become efficient due to improvement of the copy execution efficiency.

### [Second Embodiment]

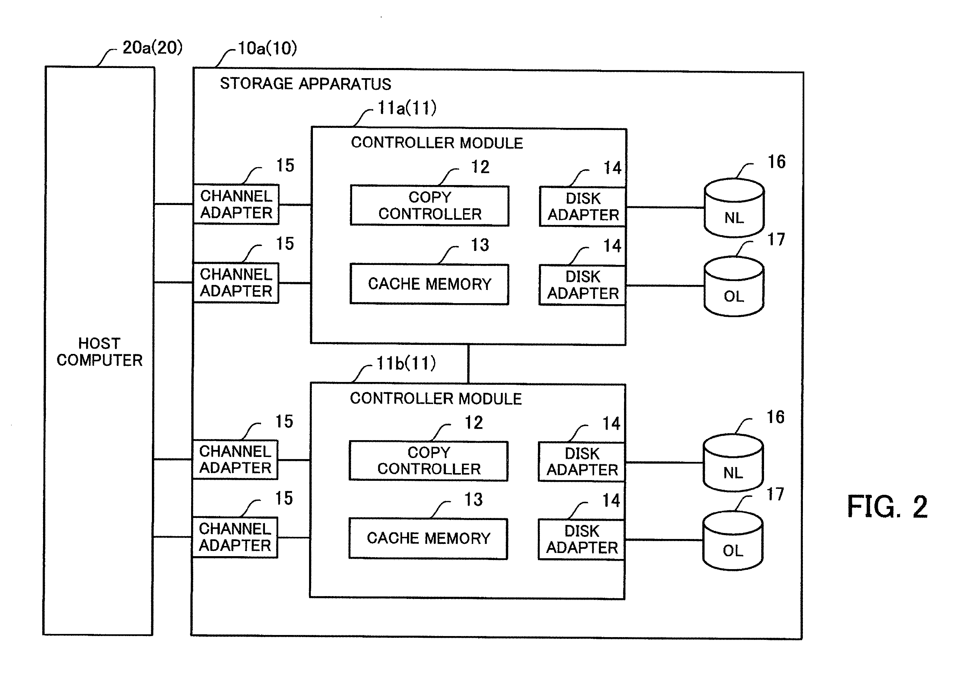

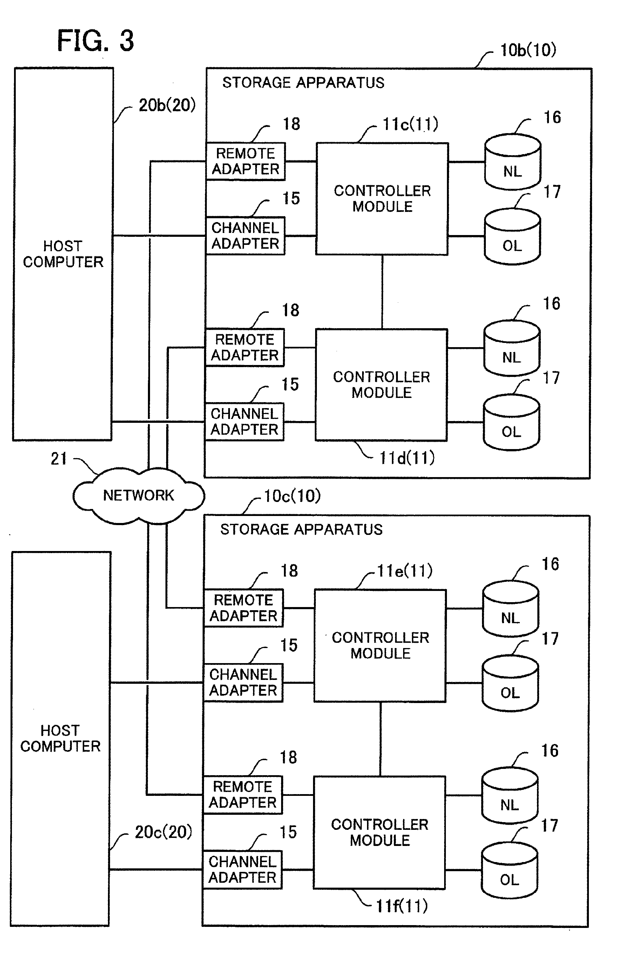

Next, a configuration of a storage apparatus of the second embodiment will be described, referring to FIGS. 2 and 3. The storage apparatus may have a local or remote configuration according to the demand of the system.

First, a local configuration of the storage apparatus of the second embodiment will be described, referring to FIG. 2. FIG. 2 illustrates an exemplary local configuration of the storage apparatus of the second embodiment.

A storage apparatus 10 (10a), having a plurality of HDDs 16 and 17, forms a RAID (Redundant Array of Inexpensive Disks). The HDDs 16 and 17 store user data or control information (session management table or RAID group management table described below).

The HDD 16 is a nearline disk, and the HDD 17 is an online disk. The HDD 16, with a large capacity and a low price, has a storage capacity of 500 GB to 1 TB, and a rotation speed of about 7200 rpm, for example. The HDD 17, with a high speed and high reliability, has a storage capacity of 146 GB to 300 GB, and a rotation speed of about 15000 rpm, for example. Since a nearline disk and an online disk are related in a relative manner, the HDDs 16 and 17 are configured, with the balance between the desired performance and cost taken into account.

The storage apparatus 10 has one or more controller modules 11. Each of the controller modules 11, which is one of the information processing apparatuses, performs resource management of a copy controller 12, a cache memory 13, disk adapters 14, channel adapters 15, the HDDs 16 and 17, and the like.

The storage apparatus 10a has two controller modules 11, namely, a controller module 11a and a controller module 11b. The controller module 11a and the controller module 11b are respectively connected to both the HDDs 16 and 17 which are respectively controlled by the controller modules. The controller module 11a and the controller module 11b are connected to each other.

Although the storage apparatus 10a has two controller modules 11, this is not limiting and the storage apparatus 10a may have either the controller module 11a or the controller module 11b. In addition, the storage apparatus 10a may have three or more controller modules 11, and may have, for example, four or eight controller modules 11.

The storage apparatus 10 is connected to a host computer 20 via the channel adapters 15. The host computer 20, which is a computer used by a user, has a copy session set therein based on an instruction issued by the host computer 20. The channel adapter 15 is provided for each of the controller modules 11. The controller modules 11 are connected to the host computer 20 via a plurality of systems by a plurality (e.g., two) of channel adapters 15.

The controller module 11 includes the copy controller 12, the cache memory 13, and the disk adapter 14. The copy controller 12 manages a copy session for copying a copy source data area on a copy source disk to a copy destination data area on a copy destination disk. The cache memory 13 holds data when reading data from the HDDs 16 and 17, and also works as a buffer when writing data into the HDDs 16 and 17. In addition, the cache memory 13 stores user data or control information. The disk adapter 14 performs interface control (access control) with the HDD 16 or the HDD 17.

The storage apparatus 10a described above is capable of copying (local copy) data between the HDDs 16 and 17 controlled by the controller module 11a (or the controller module 11b). In addition, the storage apparatus 10a is capable of copying (local copy) data between one of the HDDs 16 and 17 controlled by the controller module 11a and one of the HDDs 16 and 17 controlled by the controller module 11b.

Next, a remote configuration of the storage apparatus of the second embodiment will be described, referring to FIG. 3. FIG. 3 illustrates an exemplary remote configuration of the storage apparatus of the second embodiment.

The storage apparatuses 10b and 10c, each having a plurality of HDDs 16 and 17 similarly to the storage apparatus 10a, form a RAID.

The storage apparatuses 10b and 10c each has remote adapters 18 as a difference from the storage apparatus 10a. The storage apparatuses 10b and 10c are connected to a network 21 via the remote adapters 18, thereby allowing the storage apparatuses 10b and 10c to communicate with each other.

The storage apparatuses 10b and 10c are connected to host computers 20b and 20c via the channel adapters 15, respectively. The channel adapter 15 and the remote adapter 18 are provided for each of the controller modules 11 (11c, 11d, 11e and 11f).

The storage apparatus 10b described above is capable of copying (remote copy) data between one of the HDDs 16 and 17 included in the storage apparatus 10b, and one of the HDDs 16 and 17 included in the storage apparatus 10c.

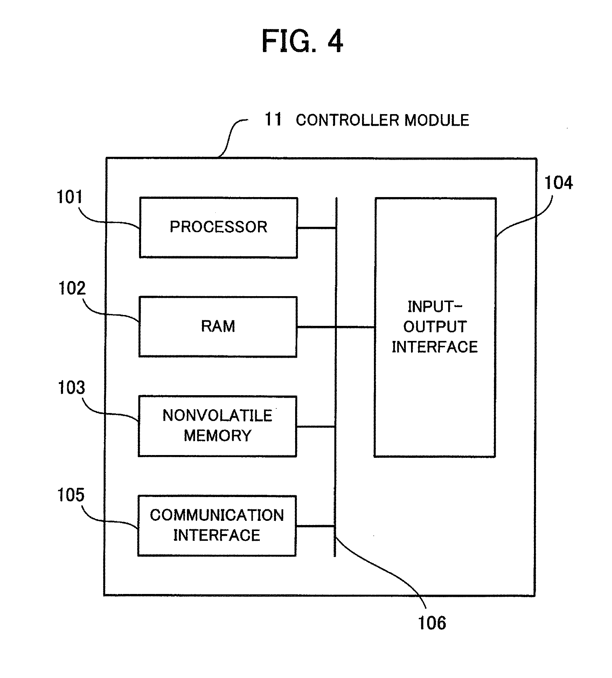

Next, a hardware configuration example of the controller module 11 of the second embodiment will be described, referring to FIG. 4. FIG. 4 illustrates an exemplary hardware configuration of the controller module of the second embodiment.

The controller module 11 is controlled as a whole by a processor 101. The processor 101 has a RAM (Random Access Memory) 102 and a plurality of peripheral devices connected thereto via a bus 106. The processor 101 may be a multiprocessor. The processor 101 is, for example, a CPU (Central Processing Unit), an MPU (Micro Processing Unit), a DSP (Digital Signal Processor), an ASIC (Application Specific Integrated Circuit), or a PLD (Programmable Logic Device). In addition, the processor 101 may be a combination of two or more elements of the CPU, MPU, DSP, ASIC and PLD.

A RAM 102 is used as the main memory of the controller module 11. The RAM 102 has temporarily stored therein at least a part of the programs of the OS (Operating System) and the firmware, or application programs to be executed by the processor 101. In addition, the RAM 102 has stored therein various data (e.g., management information of system control) needed for processing by the processor 101. In addition, the RAM 102 may be the cache memory 13, or may include the cache memory 13 separately from the memory used for storing various data.

As the peripheral devices connected to the bus 106, there are a nonvolatile memory 103, an input-output interface 104, and a communication interface 105.

The nonvolatile memory 103 holds the stored content even when power supply to the storage apparatus 10 is shut down. The nonvolatile memory 103 is, for example, a semiconductor memory such as an EEPROM or a flash memory, or an HDD. In addition, the nonvolatile memory 103 is used as an auxiliary memory of the controller module 11. The nonvolatile memory 103 has stored therein programs and firmware of the OS, application programs and various data.

The input-output interface 104 is connected to an input-output device such as an HDD to perform input and output. The input-output interface 104 transmits, to the processor 101 and the cache memory (RAM 102), signals and data sent from a memory such as an HDD.

The communication interface 105 transmits and receives data to and from other controller modules 11 in the storage apparatus 10. In addition, the communication interface 105, which is connected to the network 21, transmits and receives data to and from another computer or communication device such as another storage apparatus 10, via the network 21.

The hardware configuration described above may realize the processing function of the controller module 11 of the second embodiment. Besides the host computer 20, the information processing apparatus 1 illustrated in the first embodiment may also be realized by hardware similar to the controller module 11 illustrated in FIG. 4.

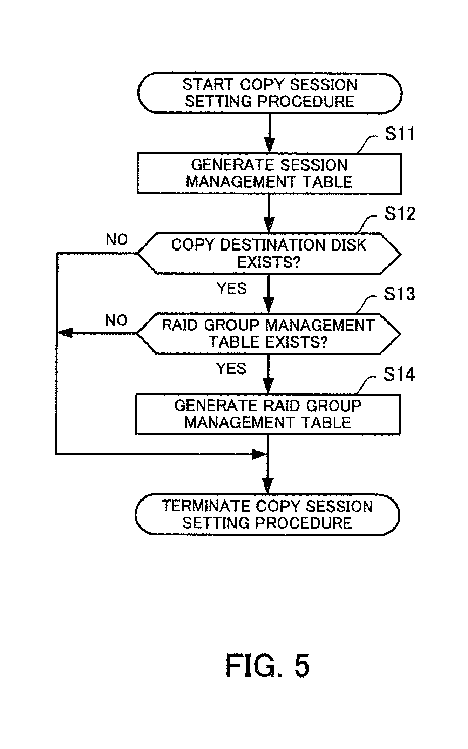

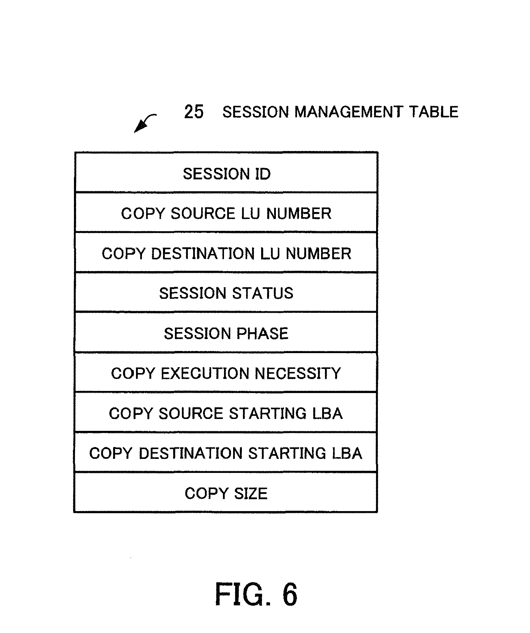

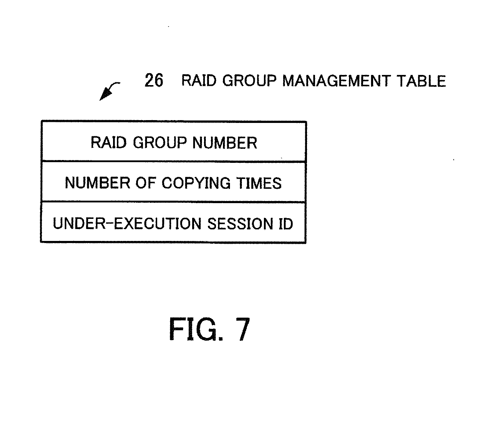

Next, a copy session setting procedure performed by the copy controller 12 of the second embodiment will be described, referring to FIGS. 5 to 7. FIG. 5 illustrates a flow chart of a copy session setting procedure of the second embodiment. FIG. 6 illustrates an exemplary session management table of the second embodiment. FIG. 7 illustrates an exemplary RAID group management table of the second embodiment.

The copy session setting procedure is a process of setting a copy session corresponding to an instruction issued by the host computer 20. The copy session setting procedure is performed by the copy controllers 12 respectively relating to the copy source and the copy destination of the copy session, based on acceptance of the instruction issued by the host computer 20. The copy controllers 12 immediately respond with an indication that the instruction from the host computer 20 has been completed, and thereafter performs data copy (e.g., remote or local mirroring, snapshot, or the like) using resources of the storage apparatus 10 without using resources of the host computer 20.

[Step S11] The copy controllers 12 relating to the copy source and the copy destination of the copy session generate a session management table 25 corresponding to an instruction issued by the host computer 20. One of the copy controllers 12 generates the session management table 25 on the copy source disk when the instruction specifies that one of the HDDs 16 and 17 controlled by the copy controller 12 is the copy source disk. In addition, the other of the copy controller 12 generates the session management table 25 on the copy destination disk when the instruction specifies that one of the HDDs 16 and 17 controlled by the copy controller 12 is the copy destination disk.

[Step S12] The copy controllers 12 each determine whether or not the instruction specifies that one of the HDDs 16 and 17 controlled by the copy controller 12 is the copy destination disk. The copy controller 12 proceeds to step S13 when the instruction specifies that one of the HDDs 16 and 17 controlled by the copy controller 12 is the copy destination disk, or terminates the copy session setting procedure when the instruction does not specify that one of the HDDs 16 and 17 controlled by the copy controller 12 is the copy destination disk.

[Step S13] The copy controller 12 determines whether or not there exists a RAID group management table 26 on the copy destination disk. When there exists the RAID group management table 26 on the copy destination disk, the copy controller 12 proceeds to step S14, or terminates the copy session setting procedure when no RAID group management table 26 exists on the copy destination disk.

[Step S14] The copy controller 12 generates the RAID group management table 26 on the copy destination disk.

In this manner, the storage apparatus 10 generates the session management tables 25, one each on the copy source disk and the copy destination disk, for each copy session setting. In addition, the storage apparatus 10 generates the RAID group management table 26 on the copy destination disk.

Here, the session management table 25 will be described, referring to FIG. 6. The session management table 25 includes a session ID (IDentification), a copy source LU (Logical Unit) number, a copy destination LU number, session status, a session phase, and a copy execution necessity. Furthermore, the session management table 25 includes a copy source starting LBA (Logical Block Address), a copy destination starting LBA, and a copy size.

A session ID is identification information capable of uniquely identifying a copy session. The session ID, provided in the order of setting the copy sessions, is a sequential number, for example. An LU number, which is identification information capable of uniquely identifying a volume which is a logical division of the RAID group, is a sequential number, for example. A copy source LU number is a number for identifying a volume which is the copy source. A copy destination LU number is a number for identifying a volume which is the copy destination.

One or more volumes (logical units) identified by the LU number are set to a single RAID group. Therefore, when a RAID is formed by a plurality of HDDs 16 or HDDs 17, a volume may be set across a plurality of HDDs 16 or HDDs 17.

The session status is information indicating the state of a copy session, in other words the progress state of a copy. Included in a session status are: "Active", "Suspend", "ErrorSuspend", "Reserve", and the like. "Active" indicates an execution state of the copy, and "Suspend" indicates a state in which the copy is temporarily suspended. In addition, "ErrorSuspend", which is a state in which the copy has failed, is the state in which execution of the copy has stopped, for example, and "Reserve" is a transient state before starting a copy.

The session phase is information indicating the progress state of a copy. Included in the session phase are: "Copying" and "Equivalent". "Copying" is a state in which a copy is being performed, and "Equivalent" is a state in which a copy has been completed, and a state in which data of the copy source and the copy destination has become equivalent.

The copy execution necessity, which is information used to determine whether or not to execute a copy, includes "necessary" and "unnecessary". The copy execution necessity is determined by the copy controller 12 controlling the copy destination disk.

The copy source starting LBA is information identifying a logical block address (LBA) of a volume which is the copy source. The copy destination starting LBA is information identifying a logical block address of a volume which is the copy destination. The copy size is information capable of specifying the size of data to be copied.

Here, the RAID group management table 26 will be described, referring to FIG. 7. The RAID group management table 26 includes a RAID group number, the number of copying times, and an under-execution session ID.

The RAID group management table 26 manages the copy session executing a copy for each RAID group and the number of execution times of a minimum unit copy of a copy session executing the copy.

The RAID group number is the number capable of uniquely identifying a RAID group. The number of copying times is the number of execution times of the minimum unit copy of a copy session of a copy being executed. The under-execution session ID is a session ID during execution of a copy. In the second embodiment, there is at most one under-execution session ID.

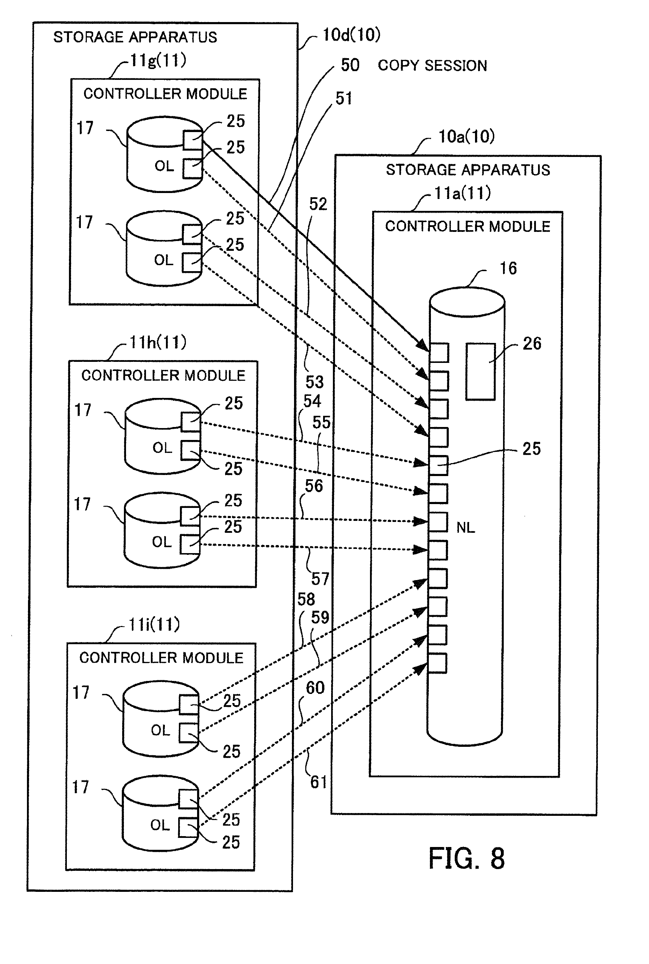

Next, a copy session which is set by a copy session setting procedure will be described, referring to FIG. 8. FIG. 8 illustrates an exemplary setting of the copy session of the second embodiment.

The exemplary setting of the copy session of FIG. 8 illustrates a case where the host computer 20 (not illustrated) has issued a data copy instruction 12 times, with the HDDs 17 of the storage apparatus 10d being the copy source disks, and the HDDs 16 of the storage apparatus 10a being the copy destination disks. Although the HDDs 16 and 17 are illustrated inside the controller modules 11 for simplicity of the drawing, it is meant to clarify their correspondence and does not necessarily mean that the HDDs 16 and 17 are always provided inside the controller module 11.

The storage apparatus 10d has controller modules 11g, 11h and 11i. The controller modules 11g, 11h and 11i respectively control the HDD 17 which is the copy source disk.

The storage apparatus 10a has the controller module 11a. The controller module 11a controls the HDD 16 which is the copy destination disk.

First, when setting a copy session 50, the controller module 11g sets the session management table 25 on the HDD 17 which is the copy source disk. In addition, the controller module 11a sets the session management table 25 and RAID group management table 26 on the HDD 16 which is the copy destination disk.

Next, when setting a copy session 51, the controller module 11g further sets the session management table 25 on the HDD 17 which is the copy source disk. In addition, the controller module 11a sets the session management table 25 on the HDD 16 which is the copy destination disk. In this case, since the RAID group management table 26 already exists, the controller module 11a does not set the RAID group management table 26 again.

Thereafter, copy sessions 52, 53,..., 61 are set, and the session management table 25 is set on the copy source disk and the copy destination disk for each copy session.

The controller module 11a executes a copy of a single copy session at a time even when there is a plurality of copy sessions, and whereby access time by sequentially accessing the HDD 16 is expected to be shortened. For example, the controller module 11a executes a copy of the copy session 50 (indicated by a solid line) but does not execute copies of other copy sessions (indicated by a broken line).

Such a control is realized when the controller module 11a which is the copy destination manages the schedule of each copy session using the RAID group management table 26 and notifies respective controller modules 11g, 11h and 11i of the schedule.

When the copy destination disk is a nearline disk such as the HDD 16, and the copy source disk is an online disk such as the HDD 17, the disk access performance of the HDD 16 is influenced by the disk access performance of the HDD 17 and may degrade. Degradation of disk access performance of the HDD 17 is caused because a nearline disk has generally a lower disk access performance than an online disk.

Although a nearline disk mounted on a disk array apparatus is inexpensive and has a large capacity and its effective use allows construction of a large-scale system with suppressed cost, it has the problem described above.

Because the controller module 11 of the copy destination disk determines the copying schedule, the storage apparatus 10 is capable of preventing degradation of disk access performance of the copy source disk even when there exists a difference of disk access performance between the copy source disk and the copy destination disk. The storage apparatus 10 as described above facilitates use of a nearline disk as a backup of a business-use volume. In addition, the storage apparatus 10 described above is capable of suppressing stagnation of business on an online disk due to delay of copy processes, when an online disk is used as a business-use volume which is the backup source.

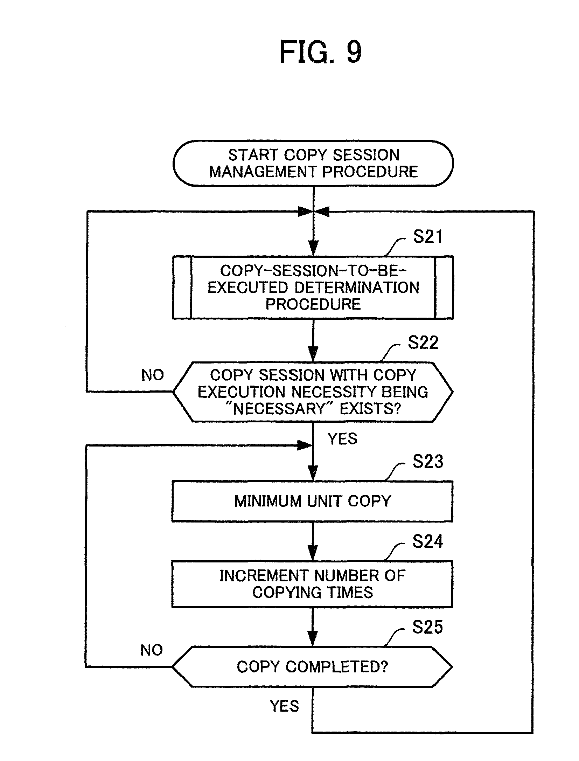

Next, a copy session management procedure performed by the copy controller 12 managing the copy destination disk will be described, referring to FIG. 9. FIG. 9 illustrates a flow chart of a copy session management procedure of the second embodiment.

The copy session management procedure is a process of performing execution control of a copy while managing copy sessions. The copy session management procedure is performed by the copy controller 12 of the controller module 11 of the copy destination disk when the session management tables 25 and the RAID group management table 26 have been set on the copy destination disk.

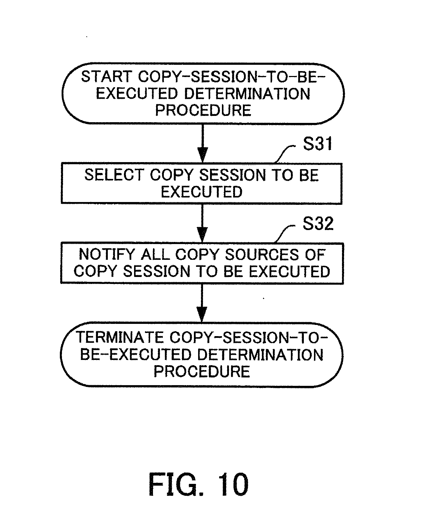

[Step S21] The copy controller 12 executes a copy-session-to-be-executed determination procedure. The copy-session-to-be-executed determination procedure is a process of determining a copy session which executes a copy. Details of the copy-session-to-be-executed determination procedure will be described later, referring to FIG. 10.

[Step S22] The copy controller 12 determines whether or not there exists a copy session with the copy execution necessity in the session management table 25 being "necessary". When there exists a copy session with the copy execution necessity in the session management table 25 being "necessary", the copy controller 12 proceeds to step S23, or otherwise proceeds to step S21.

[Step S23] The copy controller 12 copies a minimum unit of data (e.g., 256 kilobytes) from the copy source data area to the copy destination data area identified by the copy session for which the copy execution necessity is "necessary". It suffices that the minimum unit of data copy is preliminarily set and arbitrary units may be set such as units of logic blocks. The copy controller 12 stores the session ID of the copy session executing a copy in the under-execution session ID of the RAID group management table 26.

[Step S24] Starting from zero, the copy controller 12 increments the number of copying times by one each time a minimum unit copy is executed at step S23. In other words, the copy controller 12 calculates (manages) the number of execution times of the minimum unit copy of the copy session executing the copy. The copy controller 12 stores the number of execution times of the minimum unit copy of the copy session executing the copy in the number of copying times of the RAID group management table 26.

[Step S25] The copy controller 12 determines whether or not the copy completion condition is satisfied. The copy controller 12 proceeds to step S21 when the copy completion condition is satisfied, or proceeds to step S23 when the copy completion condition is not satisfied.

Although the copy completion condition is that the copy of the copy session executing the copy has been completed, or the number of execution times of a minimum unit copy has reached a predetermined value, it is also possible to set completion conditions other than those described above. The number of execution times of a minimum unit copy is, for example, 256.

In the manner described above, the storage apparatus 10 realizes minimum unit × predetermined value (e.g., 256×256 kilobytes) sequential disk accesses to the copy destination disk, for a copy execution of a single copy session. Accordingly, the storage apparatus 10 controlling the copy destination disk suppresses degradation of disk access performance of the copy destination disk. Accordingly, the storage apparatus 10 controlling the copy source disk suppresses degradation of disk access performance of the copy source disk.

Although the copy controller 12 manages the extent of a single copy execution of a copy session (number of times management) based on the number of execution times of the minimum unit copy, this is not limiting and the extent of a single copy execution of a copy session may be managed using other parameters. For example, the copy controller 12 may manage the extent of a single copy execution of a copy session based on time period. In such a case, the copy controller 12 may manage the extent of a single copy execution of a copy session by iteratively executing the minimum unit copy for a predetermined time period. In addition, the copy controller 12 may use, as other parameters, busy status of the copy source disk, usage status of the cache memory 13, or the like. In addition, the copy controller 12 may be configured to manage the extent of a single copy execution of a copy session using not only a single parameter, but also a combination of a plurality of parameters.

Next, the copy-session-to-be-executed determination procedure performed by the copy controller 12 managing the copy destination disk will be described, referring to FIG. 10. FIG. 10 illustrates a flow chart of the capy-session-to-be-executed determination procedure of the second embodiment.

The copy-session-to-be-executed determination procedure is a process of determining a copy session executing a copy. The copy-session-to-be-executed determination procedure is performed by the copy controller 12 of the controller module 11 of the copy destination disk at step S21 of the copy session management procedure.

[Step S31] The copy controller 12 selects a copy session executing a copy. Specifically, the copy controller 12 monitors the session management tables 25 of all the copy sessions and extracts, as selection candidates, copy sessions whose session status is "Active" and whose session phase is "Copying". The copy controller 12 generates a queue for the extracted copy sessions and selects, on a first-come-first-served basis, a single copy session executing a copy. The copy controller 12 schedules the order of execution of copy sessions cyclically according to a chronological policy by placing the copy session which has once been selected at the end of the queue.

[Step S32] The copy controller 12 notifies (corresponding to notification of schedule) a desired copy source of the selected copy session and terminates the copy-session-to-be-executed determination procedure. The copy controller 12 notifies the copy controller 12 managing the copy source disk by communication between the controller modules 11 or communication between the storage apparatuses 10.

The copy controller 12 performs notification of the selected copy session by notifying the copy execution necessity. In other words, the copy controller 12 notifies the copy controller 12 managing the copy source disk of the selected copy session of the copy execution necessity "necessary". In addition, the copy controller 12 notifies the copy controller 12 managing the copy source disk of the copy session which has not been selected of the copy execution necessity "unnecessary".

The copy controller 12 having received the notification of the copy execution necessity updates the session management table 25.

The copy controller 12 managing the copy destination disk may notify all the copy controllers 12 managing the copy source disks of the copy sessions of the copy execution necessity. In addition, the copy controller 12 managing the copy destination disk may notify the copy controller 12 managing the copy source disk of the copy session for which the copy execution necessity has changed of the copy execution necessity.

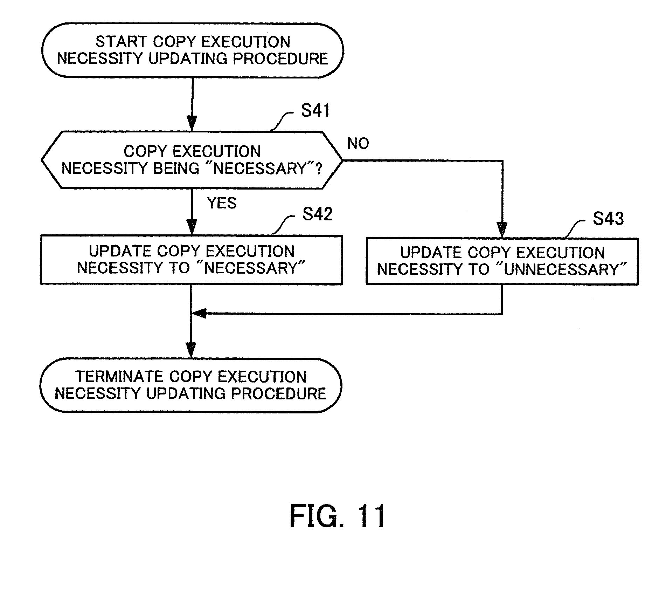

Next, the copy execution necessity updating procedure performed by the copy controller 12 managing the copy source disk will be described, referring to FIG. 11. FIG. 11 illustrates a flow chart of the copy execution necessity updating procedure of the second embodiment.

The copy execution necessity updating procedure is a process of updating the copy execution necessity of the copy session. The copy execution necessity updating procedure is performed upon receiving notification of the copy execution necessity.

[Step S41] The copy controller 12 determines whether or not the copy execution necessity is "necessary". When the copy execution necessity is "necessary, the copy controller 12 proceeds to step S42, or proceeds to step S43 when the copy execution necessity is not "necessary" (in other words, when the copy execution necessity is "unnecessary").

[Step S42] The copy controller 12 updates the copy execution necessity in the session management table 25 to "necessary" and terminates the copy execution necessity updating procedure.

[Step S43] The copy controller 12 updates the copy execution necessity in the session management table 25 to "unnecessary" and terminates the copy execution necessity updating procedure.

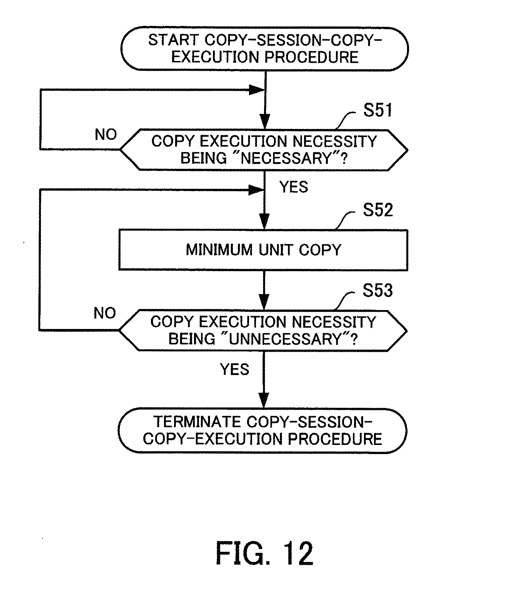

Next, a copy-session-copy-execution procedure performed by the copy controller 12 managing the copy source disk will be described, referring to FIG. 12. FIG. 12 illustrates a flow chart of the copy-session-copy-execution procedure of the second embodiment.

The copy-session-copy-execution procedure is a process of determining a copy session executing a copy. The copy-session-to-be-executed determination procedure is performed while the session management table 25 is being set on the copy source disk.

[Step S51] The copy controller 12 determines whether or not the copy execution necessity is "necessary". When the copy execution necessity is "necessary", the copy controller 12 proceeds to step S52, or proceeds to step S51 when the copy execution necessity is not "necessary".

[Step S52] The copy controller 12 copies a minimum unit of data from the copy source data area to the copy destination data area identified by the copy session for which the copy execution necessity is "necessary".

[Step S53] The copy controller 12 determines whether or not the copy execution necessity is "unnecessary". When the copy execution necessity is "unnecessary, the copy controller 12 terminates the copy-session-copy-execution procedure. The copy controller 12 proceeds to step S52 when the copy execution necessity is not "unnecessary" (in other words, when the copy execution necessity is "necessary").

In this manner, the copy controller 12 managing the copy source disk executes a copy of the copy session, according to the schedule generated by the copy controller 12 managing the copy destination disk.

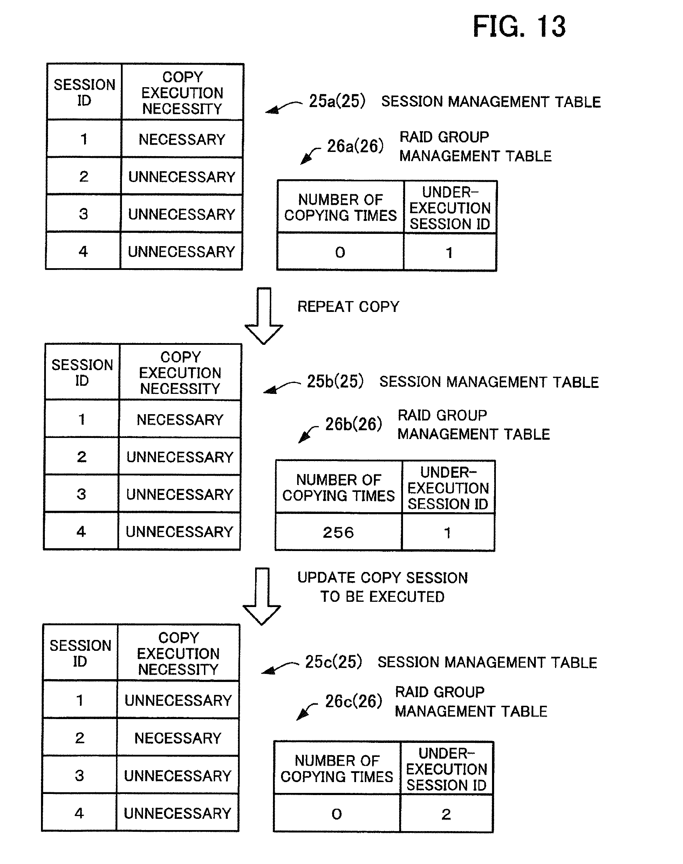

Next, an exemplary transition of the information stored in the session management table 25 and an exemplary transition of the information stored in the RAID group management table 26 will be described in accordance with an execution process of a copy, referring to FIG. 13. FIG. 13 illustrates an exemplary transition of the session management table and the RAID group management table when executing a copy in the second embodiment.

Session management tables 25a, 25b and 25c collectively indicate session IDs and the copy execution necessities of four copy sessions of the session management tables 25 having session IDs "1", "2", "3" and "4". The session management tables 25a, 25b and 25c are illustrated for explanation.

First, it is assumed that a copy session of the session ID "1" has been selected as a copy to be executed when four copy sessions (session IDs, "1, "2", "3" and "4") are set in the order of session IDs.

Accordingly, the copy controller 12 controlling the copy destination disk updates the copy execution necessity as indicated in the session management table 25a. In other words, the copy execution necessity of the session ID "1" is set "necessary", whereas the copy execution necessity of the other session IDs "2", "3" and "4" is set "unnecessary". In addition, the copy controller 12 controlling the copy destination disk sets the number of copying times to "0" and the under-execution session ID to "1" as indicated in the RAID group management table 26a.

Here, the copy controller 12 controlling the copy destination disk updates the number of copying times in the RAID group management table 26 each time step S24 of the copy session management procedure is performed. The session management table 25 when the number of copying times "256" of the copy completion condition has been reached is the session management table 25b, and the RAID group management table 26 is the RAID group management table 26b.

Here, selection is performed to update the copy session of a copy to be executed, in which a copy session of the session ID "2" is selected as a copy to be executed.

Accordingly, the copy controller 12 controlling the copy destination disk updates the copy execution necessity as indicated in the session management table 25c. In other words, the copy execution necessity of the session ID "2" is set "necessary", whereas the copy execution necessity of the other session IDs "1", "3" and "4" is set "unnecessary". In addition, the copy controller 12 controlling the copy destination disk sets the number of copying times to "0" and the under-execution session ID to "2" as indicated in the RAID group management table 26c.

Thereafter, by repeating the procedure described above for each copy session, the copy controller 12 controlling the copy destination disk realizes sequential access of the copy destination disk for all the copy sessions. In this manner, the storage apparatus 10 improves disk access performance regardless of arrangement of the copy destination disk and the copy source disk.

### [Third Embodiment]

Next, a storage apparatus of a third embodiment will be described. Although the storage apparatus of the second embodiment has at most one under-execution session ID, the storage apparatus of the third embodiment may have a plurality of under-execution session IDs.

For example, there may be a case where the storage apparatus 10 needs to provide a higher priority to disk access from the host computer 20 than the copy process. Accordingly, the storage apparatus 10 is capable of suppressing resources to be assigned to the copy process operating in the background of disk access from the host computer 20. In addition, the storage apparatus 10 is capable of switching between a control state of a low speed mode in which resources to be assigned to the copy process are suppressed and a control state of a high speed mode in which there is no limitation to resources to be assigned to the copy process. Suppression of resources mentioned here may be expressed in other words as suppression of throughput.

If there is at most one under-execution session ID in the low speed mode, there arise in turn a case where resources at the copy destination is not effectively used, preventing the copy performance of the storage apparatus 10 from being sufficiently exerted.

Therefore, description will be provided allowing at most one under-execution session ID in the low speed mode for each of the controller modules 11.

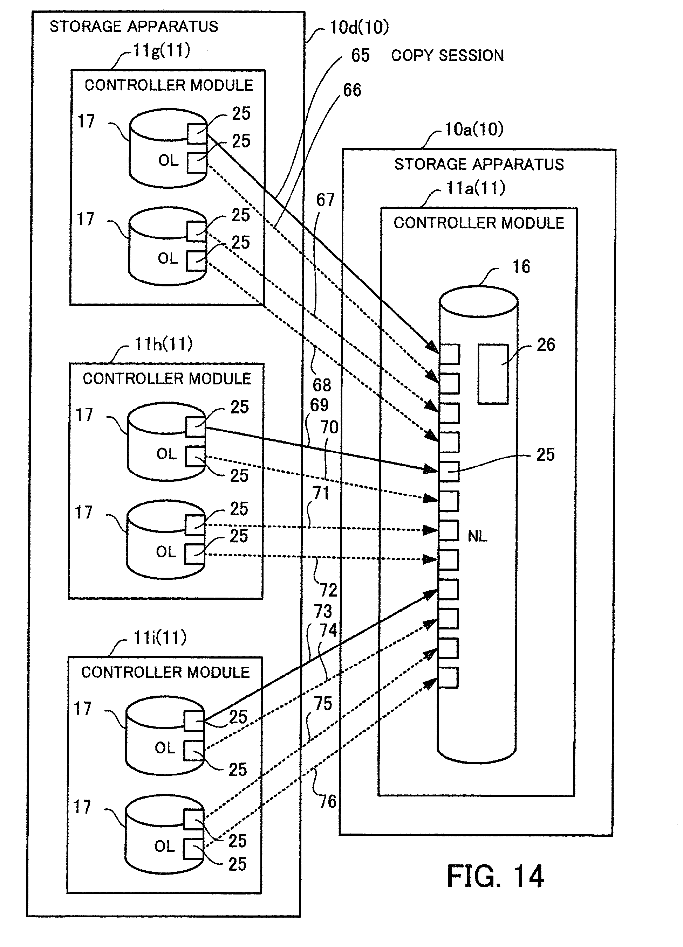

Here, a copy session which is set in the third embodiment will be described, referring to FIG. 14. FIG. 14 illustrates an exemplary setting of copy sessions of the third embodiment.

The exemplary setting of the copy sessions of FIG. 14 illustrates a case where the host computer 20 (not illustrated) has issued a data copy instruction 12 times, with the HDDs 17 of the storage apparatus 10d being the copy source disks, and the HDD 16 of the storage apparatus 10a being the copy destination disk. Although the HDDs 16 and 17 are illustrated inside the controller modules 11 for simplicity of the drawing, it is meant to clarify their correspondence and does not necessarily mean that the HDDs 16 and 17 are always provided inside the controller modules 11.

The storage apparatus 10d has the controller modules 11g, 11h and 11i. The controller modules 11g, 11h and 11i respectively control the HDDs 17 which are the copy source disk.

The storage apparatus 10a has the controller module 11a. The controller module 11a controls the HDD 16 which is the destination disk.

First, when setting a copy session 65, the controller module 11g sets the session management table 25 on the HDD 17 which is the copy source disk. In addition, the controller module 11a sets the session management table 25 and the RAID group management table 26 on the HDD 16 which is the copy destination disk.

Next, when setting a copy session 66, the controller module 11g further sets the session management table 25 on the HDD 17 which is the copy source disk. In addition, the controller module 11a sets the session management table 25 on the HDD 16 which is the copy destination disk. In this case, since the RAID group management table 26 already exists, the controller module 11a does not set the RAID group management table 26 again.

Thereafter, copy sessions 67, 68,..., 76 are set, and the session management table 25 is set on each of the copy source disk and the copy destination disk for each copy session.

The controller module 11a executes copies of a plurality of copy sessions at a time, within a predetermined tolerance, when there is a plurality of copy sessions.

For example, the controller module 11a (the copy controller 12) executes copies of copy sessions 65, 69 and 73 (indicated by solid lines) but does not execute copies of the other copy sessions (indicated by broken lines).

In order to execute copies of a plurality of copy sessions at a time, the RAID group management table 26, unlike the second embodiment, allows for storing a plurality of under-execution session IDs and the number of copying times for each copy session.

At the same time, however, executing copies of a plurality of copy sessions may result in degradation of sequential accessibility to the copy destination disk. Therefore, the controller module 11a temporarily holds the copy data in the cache memory 13 and writes it back to the copy destination disk (HDD 16) when a predetermined amount (an extent equivalent to a single copy execution of a copy session) has been accumulated.

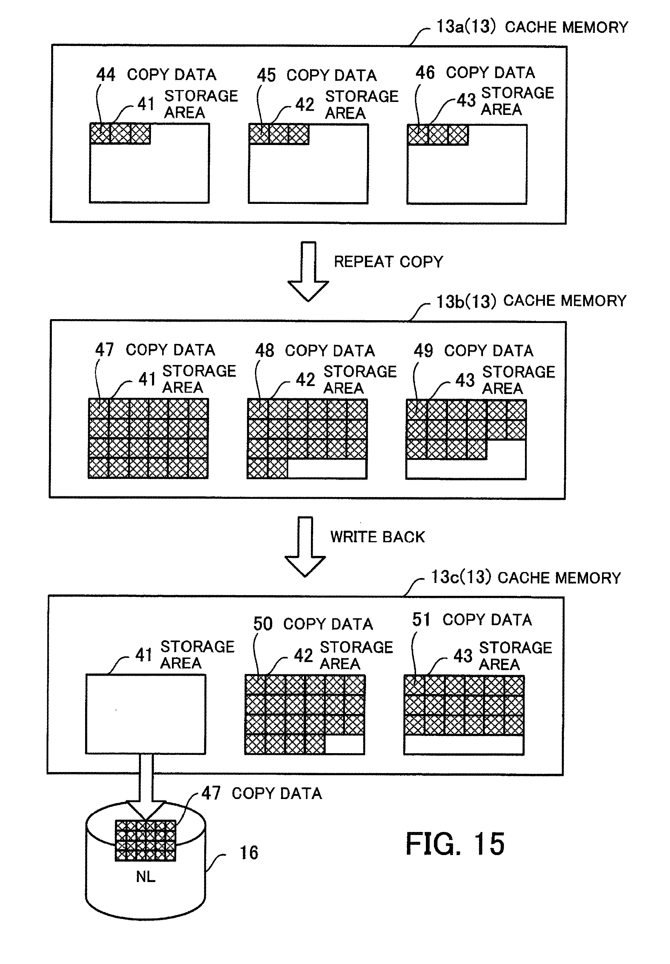

An exemplary usage of the cache memory 13 will be described, referring to FIG. 15. FIG. 15 illustrates an exemplary transition of data held in the cache memory when executing a copy of the third embodiment.

The controller module 11a prepares storage areas 41, 42 and 43 in the cache memory 13 respectively for the copy sessions 65, 69 and 73. The cache memory 13 holds the copy data 44, 45 and 46 of the copy sessions 65, 69 and 73 respectively in the storage areas 41, 42 and 43 (cache memory 13a).

As execution of a copy progresses, the storage area 41 holds copy data 47 of an extent equivalent to a single copy execution of a copy session. In addition, the other storage areas 42 and 43 also hold copy data 48 and 49 (cache memory 13b).

Since the storage area 41 has held the copy data 47 of an extent equivalent to a single copy execution of a copy session, the controller module 11a writes back the copy data 47 to the HDD 16. In addition, the other storage areas 42 and 43 hold the copy data 50 and 51, as the execution of copy progresses (the cache memory 13c).

Thereafter, the controller module 11a writes back the copy data to the HDD 16 when the storage areas 42 and 43 have held the copy data of an extent equivalent to a single copy execution of a copy session.

Accordingly, the storage apparatus 10 may have sequential accessibility to the copy destination disk even when copies of a plurality of copy sessions are performed.

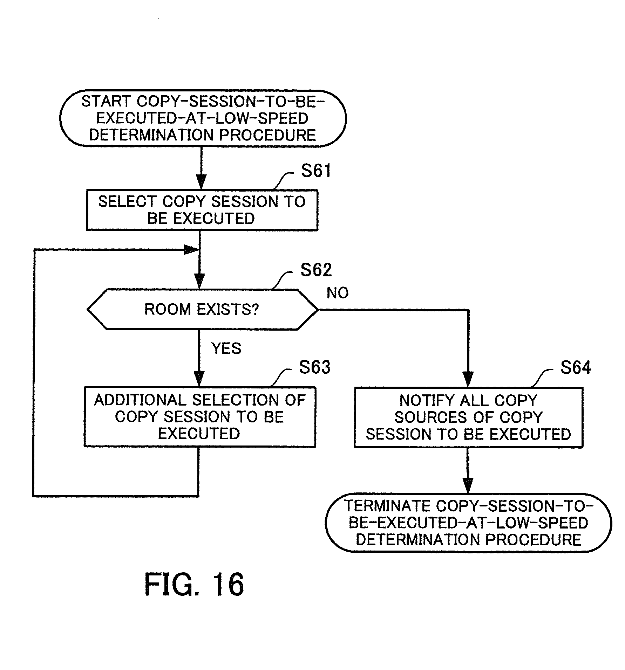

A copy-session-to-be-executed-at-low-speed determination procedure for determining a selection of such a plurality of copy sessions will be described referring to FIG. 16. FIG. 16 illustrates a flow chart of the copy-session-to-be-executed-at-low-speed determination procedure of the third embodiment.

The copy-session-to-be-executed-at-low-speed determination procedure is performed by the copy controller 12 of the controller module 11 of the copy destination disk.

[Step S61] The copy controller 12 selects a copy session executing a copy. Specifically, the copy controller 12 monitors the session management table 25 of all the copy sessions and extracts, as selection candidates, copy sessions whose session status is "Active" and whose session phase is "Copying". The copy controller 12 generates a queue for the extracted copy sessions and selects, on a first-come-first-served basis, a single copy session executing a copy. The copy controller 12 schedules the order of executing copy sessions cyclically according to a chronological policy by placing the copy session which has once been selected at the end of the queue.

[Step S62] The copy controller 12 determines whether or not there is room for further selecting a copy session. When there is room for further selecting a copy session, the copy controller 12 proceeds to step S63, or proceeds to step S64 when there is no room.

Determination on whether or not there is room for selecting a copy session may also be performed by comparing the number of selectable copy sessions with a preliminarily set value, or according to other criteria. For example, there may be provided evaluation values from preliminarily evaluating the throughput of the copy source disk and determination on whether or not there is room for selecting a copy session may be performed by comparing the sum of the evaluation values with a preliminarily set value.

[Step S63] The copy controller 12 selects one more copy session which executes a copy. For selecting an additional copy session, there may be provided a selection condition such as at most one for each of the controller modules 11, or at most one for each copy source disk. Accordingly, concentration of load on a particular controller module 11 or a copy source disk may be avoided.

[Step S64] The copy controller 12 notifies a desired copy source of the selected copy session (corresponding to notification of schedule) and terminates the copy-session-to-be-executed-at-low-speed determination procedure. The copy controller 12 notifies the copy controller 12 managing the copy source disk by communication between the controller modules 11 or communication between the storage apparatuses 10.

Accordingly, the storage apparatus 10 may have sequential accessibility to the copy destination disk even when copies of a plurality of copy sessions are executed, and whereby disk access performance is improved regardless of arrangement of the copy destination disk and the copy source disk.

The processing function described above may be realized by a computer. In such a case, a program having described therein process contents of functions that need to be provided to the information processing apparatus 1 and the storage apparatus 10 (access controller 2, copy controller 3, copy session management unit 4, execution unit 5, etc.). By executing the program on a computer, the processing function described above is realized on the computer. The program having described therein the process contents may be stored on a computer-readable storage medium. As a computer-readable storage medium, there is a magnetic memory device, an optical disk, an optical magnetic storage medium, a semiconductor memory, or the like. As a magnetic storage apparatus, there is a hard disk drive (HDD), a flexible disk (FD), a magnetic tape, or the like. As an optical disk, there is a DVD, a DVD-RAM, a CD-ROM/RW, or the like. As a magneto optical storage medium, there is MO (Magneto-Optical disk) or the like.

When distributing a program, portable storage media having the program stored thereon such as DVDs, CD-ROMs, for example, are sold. In addition, a program may be stored in a storage apparatus of a server computer, and the program may be transferred to other computers from the server computer via a network.

A computer which executes a program stores, in a storage apparatus thereof, the program stored in a portable storage medium or transferred from a server computer, for example. The computer then reads the program from the storage apparatus thereof and performs a procedure according to the program. The computer may also read the program directly from the portable storage medium and perform a procedure according to the program. In addition, each time a program is transferred from a server computer connected via a network, the computer may also sequentially perform a procedure according to the received program.

In addition, at least a part of the processing functions may be realized using an electronic circuit such as a DSP, an ASIC, a PLD, or the like.

According to an aspect, disk access performance may be improved in the information processing apparatus and the copy control method, regardless of arrangement of the copy destination disk and the copy source disk.

## Claims

1. An information processing apparatus comprising:
access control means for controlling access to a storage apparatus capable of storing information; and
copy session management means for preparing, when the storage apparatus is a copy destination, a schedule of a copy session which executes a copy of information of a copy source storage apparatus, notifying the copy source storage apparatus of the schedule, and causing the copy source storage apparatus to execute a copy of the copy session according to the schedule.

2. The information processing apparatus according to claim 1, comprising execution means for executing a copy of a copy session according to a schedule notified from the copy destination storage apparatus when the storage apparatus is a copy source.

3. The information processing apparatus according to claim 2, wherein the execution means repeats a minimum unit copy until a predetermined condition is satisfied.

4. The information processing apparatus according to claim 3, wherein the copy session management means monitors satisfaction of the predetermined condition and performs re-scheduling upon satisfaction of the predetermined condition.

5. The information processing apparatus according to claim 4, wherein the predetermined condition is execution of a minimum unit copy for a preliminarily set number of times.

6. The information processing apparatus according to claim 5, wherein the copy session management means holds, in the copy destination, number-of-execution-times management information including information capable of identifying a copy session executing a copy, and a number of execution times of the minimum unit copy of the copy session executing the copy.

7. The information processing apparatus according to claim 1, wherein, when there is a plurality of copy sessions with the storage apparatus being a copy destination storage apparatus,
the copy session management means notifies all the copy control means controlling the copy source storage apparatus of the schedule.

8. The information processing apparatus according to claim 1, wherein the schedule indicates necessity of copy execution, and
the copy session management means notifies copy control means which changes the necessity of copy execution, among the copy control means controlling the copy source storage apparatus of the schedule.

9. The information processing apparatus according to claims 1 to 8, wherein the copy destination storage apparatus includes a volume which has been set in a RAID formed by a plurality of storage apparatuses.

10. The information processing apparatus according to claims 1 to 8, wherein the copy session management means performs scheduling allows at most one copy session to execute a copy.

11. The information processing apparatus according to claim 3, wherein the copy session management means is capable of scheduling which allows a plurality of copy sessions each executing a copy, and
the information processing apparatus comprises a cache memory capable of storing copy data for each of the copy sessions executing a copy, and writes back to the copy destination storage apparatus each time a group of copy data is obtained by repeating the minimum unit copy until a predetermined condition is satisfied.

12. The information processing apparatus according to claim 11, wherein the copy session management means allows at most one copy session to execute a copy, for each of the copy control means controlling the copy source storage apparatus.

13. The information processing apparatus according to claim 1, wherein the copy source storage apparatus is an online disk, and the copy destination storage apparatus is a nearline disk.

14. A computer program which causes a computer to perform a procedure including controlling access to a storage apparatus capable of storing information, and managing a copy session of copying information in a copy source storage apparatus to a copy destination storage apparatus, the program causing the computer to perform a procedure comprising:
preparing, when the storage apparatus is a copy destination, a schedule of a copy session which executes a copy of information of a copy source storage apparatus; and
notifying a copy controller performing copy control of the copy source storage apparatus to the schedule.

15. A copy control method executed by a computer, the computer performing a procedure including controlling access to a storage apparatus capable of storing information, and managing a copy session of copying information in a copy source storage apparatus to a copy destination storage apparatus,
the copy control method comprising in the computer:
preparing, when the storage apparatus is a copy destination, a schedule of a copy session which executes a copy of information of a copy source storage apparatus; and
notifying copy control means performing copy control of the copy source storage apparatus of the schedule, and causing the copy source storage apparatus to execute a copy of the copy session according to the schedule.
